# NEUE EUROPÄISCHE PATENTSCHRIFT

(11) **EP 1 141 572 B2**
(45) Veröffentlichungstag und Bekanntmachung des Hinweises auf die Entscheidung über den Einspruch: **31.10.2007**
(45) Hinweis auf die Patenterteilung: 18.02.2004
(21) Anmeldenummer: 99968360.0
(22) Anmeldetag: 21.12.1999
(51) Int. Cl.: F16D 65/092, F16D 65/12, F16D 69/00

(54) **BREMSEINHEIT**
BRAKING UNIT
UNITE DE FREINAGE

(30) Priorität: 23.12.1998 DE 19859839
(43) Veröffentlichungstag der Anmeldung: 10.10.2001
(73) Patentinhaber: DaimlerChrysler AG, 70327 Stuttgart (DE)
(72) Erfinder: BRAIATO, Antonio, I-10136 Torino (IT); PACHNER, Andreas, D-73066 Uhingen (DE); RIEDEL, Hans-Georg, D-75177 Pforzheim (DE); SOKOLOWSKY, Detlef, D-73760 Ostfildern (DE); SPANGEMACHER, Björn, D-71065 Sindelfingen (DE)
(74) Vertreter: Kocher, Klaus-Peter
(86) Internationale Anmeldenummer: PCT/EP1999/010234
(87) Internationale Veröffentlichungsnummer: WO 2000/039477

(56) Entgegenhaltungen:
- EP-A- 0 710 777
- EP-A- 0 730 106
- WO-A-98/55778
- DE-A- 19 706 925
- DE-A- 19 706 926
- US-A- 5 339 931
- US-A- 5 477 944
- WIRTH X: "ISOBAR ENHANCES DISC BRAKE PERFORMANCE" RAILWAY GAZETTE INTERNATIONAL,GB,IPC TRANSPORT PRESS LTD. LONDON, Bd. 153, Nr. 7, 1. Juli 1997 (1997-07-01), Seiten 477,479-480, XP000659966 ISSN: 0373-5346
- PATENT ABSTRACTS OF JAPAN vol. 010, no. 375 (M-545), 13. Dezember 1986 (1986-12-13) & JP 61 167723 A (AKEBONO BRAKE IND CO LTD), 29. Juli 1986 (1986-07-29)

## Beschreibung

Die vorliegende Erfindung betrifft eine Bremseinheit, welche mindestens zwei Bremsbacken mit je einem Reibbelag und mindestens einen Bremsscheibenrotor aufweist, wobei die äußeren Flächen des Bremsscheibenrotors zumindest teilweise je eine Reibfläche aus einem Metall-Keramik-Verbundwerkstoff (CMC) für jeweils einen Reibbelag bilden, sowie mindestens eine Zuspanneinrichtung aufweist, welche beim Bremsvorgang auf die Bremsbacken einwirkt.

Konventionelle Bremseinheiten, insbesondere in Kraftfahrzeugen, weisen üblicherweise Bremsscheibenrotoren aus Eisenguß-Material, bspw. Grauguß auf. Der Trend geht jedoch dahin, daß Bremsscheibenrotoren aus einem Keramik-Metall-Verbundwerkstoff eingesetzt werden bzw. daß mindestens die Reibflächen der Bremsscheibenrotoren aus einem Keramik-Metall-Verbundwerkstoff bestehen. Derartige Bauteile sind bspw. aus der DE 44 38 456 A1 bekannt.

Die gattungsgemäße US-A-5 477 944 beschreibt eine Bremseinheit mit einem Bremssattel an dessen Schenkel Bremsbeläge angeordnet sind. Hierbei sind zwei Zuspannvorrichtungen am Bremssattel vorgesehen, die jeweils zwei Beläge gegen die Bremsscheibe pressen.

Bei Verwendung derartiger Bremsscheibenrotoren in konventionell ausgestalteten Bremseinheiten treten jedoch, insbesondere bei Bremsvorgängen mit großer Abbremsleistung, an den Reibflächen Temperaturen auf, welche deutlich über denen an vergleichbaren Bremsscheibenrotoren aus Eisenguß-Material liegen und welche für die Reibbeläge der üblicherweise verwendeten Bremsbacken nicht verträglich sind. Daraus resultieren sog. "Fadingerscheinungen" sowie ein hoher Verschleiß der Reibbeläge.

Aufgabe der Erfindung ist es daher, eine Bremseinheit der o.g. Art bereitzustellen, bei der Bremsscheibenrotoren mit Reibflächen aus einem Keramik-Metall-Verbundwerkstoff und übliche Bremsbeläge in verträglicher Weise miteinander kombiniert sind.

Die Lösung besteht in den Merkmalen des Anspruchs 1.

Erfindungsgemäß ist also vorgesehen, daß der Nachteil der geringeren Temperaturverträglichkeit der Reibbeläge der Bremsbacken durch eine Vergrößerung der auf die Reibfläche des Bremsscheibenrotors einwirkenden Oberfläche der Reibbeläge kompensiert wird, wobei gleichzeitig die Reibbeläge durch eine homogene Einleitung der Zuspannkräfte möglichst gleichmäßig an die Reibfläche der Bremsscheibenrotoren angepreßt sind, so daß keine lokal erhöhte Wärmestromdichte entsteht.

Vorteilhafte Weiterbildungen ergeben sich aus den Unteransprüchen.

Eine weitere vorteilhafte Weiterbildung sieht vor, daß eine Zuspanneinrichtung vorgesehen ist, welche auf mindestens zwei Bremsbacken einwirkt, wobei mindestens zwei Kolben pro Bremsbacke vorgesehen sind. Damit werden die Bremsbacken unter der Wirkung von zwei oder mehr, vorzugsweise zwei bis vier Kolben so angepreßt, daß auch unter der Wirkung des Bremsmoments eine gleichmäßige Pressung gewährleistet ist. In einer weiteren Ausführungsform der vorliegenden Erfindung ist eine Zuspanneinrichtung vorgesehen, welche auf mindestens vier Bremsbacken einwirkt, wobei mindestens zwei Kolben pro Bremsbacke vorgesehen sind. Dabei handelt es sich also um vergleichsweise einfach ausgestaltete Zuspanneinrichtungen mit Mehrkolbensätteln, vorzugsweise Zwei-, Drei- oder Vierkolbensätteln. Je mehr Kolben pro Sattel vorgesehen sind, desto vorteilhafter ist es, entweder kompressible Reibbeläge oder. eine kompressible Zwischenschicht zwischen Reibbelag und Sattel vorzusehen, jeweils vorzugsweise mit einer Kompressibilität von mehr als 1 µm / bar Bremsflüssigkeitsdruck.

Eine andere vorteilhafte Ausgestaltung der vorliegenden Erfindung besteht darin, daß mehrere Einzel-Reibbeläge mit jeweils zugeordneten individuellen Zuspanneinrichtungen vorgesehen sind. Dies kann über Einkolbensättel oder Mehrkolbensättel erfolgen, in welchen ein oder mehrere, vorzugsweise zwei bis sechs, besonders bevorzugt vier oder sechs.Bremsbacken angeordnet sind. Die Reibflächen dieser Bremsbacken sind vorteilhafterweise radial groß, in Umfangsrichtung jedoch vergleichsweise klein.

Die mindestens eine Zuspanneinrichtung kann ferner mechanische und oder elektronische Ausgleichselemente aufweisen, welche so ausgelegt sind, daß die Zuspannkräfte über das Prinzip der ausgeglichenen Hebel gleichmäßig auf mehrere Reibbeläge verteilt sind. Dadurch wird eine Verbesserung der Pressung erreicht. Auch durch Verwendung von Reibbelägen mit einer Kompressibilität von über 1 µm/bar Bremsflüssigkeitsdruck und/oder einer zwischen den Reibbelägen und der Zuspanneinrichtung vorgesehenen Zwischenschicht mit einer Kompressibilität über 1 µm/bar Bremsflüssigskeitsdruck kann eine Verbesserung der Pressung zwischen Bremsscheibenrotor und Bremsbacken erreicht werden.

Insbesondere bei Verwendung von mehr als zwei hydraulisch betätigten Kolben, bspw. von acht Kolben in Verbindung mit vier Reibbelägen pro Zuspanneinrichtung ist es von Vorteil, wenn die Kolben so angeordnet sind, daß die auf die Bremsbacken einwirkende Pressung möglichst gleichmäßig ist, insbesondere für Betriebsreibwerte von etwa 0,40 bis 0,45.

Zur Unterdrückung von Bremsgeräuschen ist die Beaufschlagung des Bremsscheibenrotors durch die Reibbeläge so zu gestalten, daß sowohl Schwingungsknoten als auch Schwingungsbäuche der kritischen K0/3-Schwingung des Bremsscheibenrotors behindert werden. Dies wird dadurch erreicht, daß je zwei Bremsbacken pro Reibfläche des Bremsscheibenrotors so angeordnet sind, daß ihre Wirklinien einen Winkel α von etwa 110 bis 130° einschließen.

Eine weitere vorteilhafte Weiterbildung sieht vor, daß zumindest die Reibfläche des Bremsscheibenrotors oder der gesamte Bremsscheibenrotor oder die gesamte Bremsscheibe aus einem Keramik-Metall-Verbundwerkstoff, vorzugsweise aus einem Aluminium-Keramik-Verbundwerkstoff, bspw. auf Basis von Aluminiumoxid, Titandioxid, Bortrioxid und/oder Titanborid mit Aluminium, wie er bspw. in der deutschen Patentanmeldung 197 06 925.8-45 beschrieben ist, oder einem Silizium-Keramik-Verbundwerkstoff, bspw. auf der Basis von Siliziumcarbid, bestehen. Besonders bevorzugt ist ein faserverstärkter Verbundwerkstoff, welcher als Verstärkungsfasern bspw. Kohlefasern und/oder Siliziumcarbidfasern aufweist. Aber auch andere Fasern auf der Basis von Kohlenstoff, Stickstoff, Silizium oder Bor sind geeignet.

Als Verstärkungsfasern sind Langfasern, vorzugsweise in Form von Fasergeweben oder Fasergelegen, geeignet. Besonders bevorzugt sind Kurzfasern, vorzugsweise isotrop orientierte Kurzfasern (vgl. die DE 197 11 829 C1), so daß die Reibfläche bzw. die Bremsscheibe sowohl in Längs- als auch in Querrichtung isotrope, d. h. gleichmäßige Eigenschaften aufweist.

Der Verbundwerkstoff kann als Keramik-Komponente bspw. eine Siliziumcarbid-Keramik oder eine Aluminiumoxid-Keramik aufweisen. Andere Keramiken sind aber auch geeignet.

Die Reibfläche des Bremsscheibenrotors und der Bremsscheibenrotor sind vorzugsweise einstückig ausgebildet sind und bestehen aus demselben Material, also aus einem CMC-Material. Besonders bevorzugt ist es, die gesamte Bremsscheibe einstückig aus einem CMC-Material herzustellen, was die Fertigung besonders einfach und kostengünstig macht.

Die vorliegende Erfindung wird im folgenden anhand der beiliegenden Zeichnungen näher beschrieben. Es zeigen:
- Figur 1: eine schematische, nicht maßstabsgerechte Darstellung einer erfindungsgemäßen Bremseinheit;
- Figur 2: einen Schnitt entlang der Linie II - II in Figur 1;
- Figur 3: eine Darstellung entsprechend Figur 2 einer weiteren Ausführungsform der vorliegenden Erfindung;
- Figur 4: eine schematische Darstellung der Wirklinien der Bakkenpressung;
- Figur 5: eine schematische Darstellung einer weiteren Ausführungsform der vorliegenden Erfindung;
- Figur 6: eine schematische Darstellung der K0/3-Schwingung eines Bremsscheibenrotors.

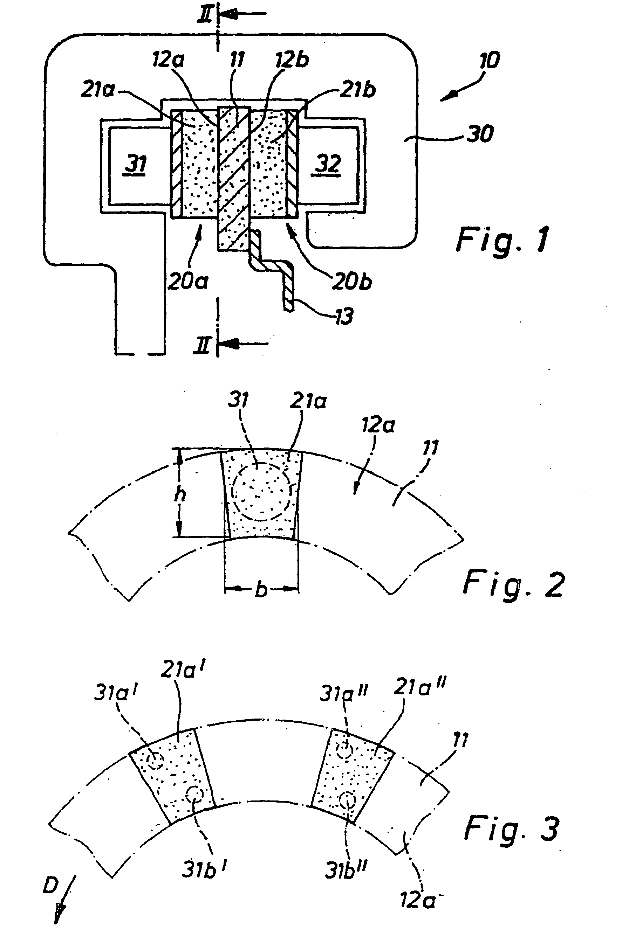

Figur 1 zeigt eine Bremseinheit 10 mit einem Bremsscheibenrotor bzw. einer Bremsscheibe 11 aus einem Keramik-Metall-Verbundwerkstoff, deren Außenfläche Reibflächen 12a, 12b darstellen. Die Bremsscheibe 11 ist mittels eines Bremsscheibentopfes oder Adapters 13 in an sich bekannter, nicht näher dargestellter Weise fixiert. Die Bremseinheit 10 weist ferner zwei Bremsbacken 20a, 20b auf mit Reibbelägen 21a, 21b, die beim Bremsvorgang auf die Reibflächen 12a, 12b der Bremsscheibe 11 einwirken. Eine an sich bekannte, lediglich schematisch dargestellte Zuspanneinrichtung 30 dient dazu, Kolbendruckflächen von Bremskolben 31, 32 zu beaufschlagen, so daß die Bremsbacken 20a, 20b auf die Reibflächen 12a, 12b einwirken und der Bremsvorgang eingeleitet wird. Dabei decken die Reibbeläge mindestens etwa 15 % der Reibfläche ab, wobei die auf die Bremsbacken 20a, 20b einwirkende Pressung möglichst gleichmäßig ist, d. h. die Reibbeläge über ihre gesamte Fläche gleichmäßig beaufschlagt werden.

Figur 2 illustriert eine Ausführungsform des erfindungsgemäßen Größenverhältnisses der Reibbeläge. Das Verhältnis der mittleren Höhe (h) zur, bei der dargestellten Trapezform des Reibbelages 21a maßgeblichen, mittleren Breite b beträgt vorzugsweise etwa 1:1 bis 1:1,6, um eine hohe radiale Überdeckung der Reibfläche 12a zu erreichen. Die Reibfläche 21a ist also radial eher groß, in Umfangsrichtung jedoch vergleichsweise klein.

Figur 3 zeigt eine Ausführungsform der vorliegenden Erfindung, bei der an der Reibfläche 12a zwei Reibbeläge 21a' und 21a'' angeordnet sind. Zur Verbesserung der Pressung werden pro Reibbelag zwei hydraulisch betätigte Kolben 31a', 31b' bzw. 31a'', 31b'' eingesetzt. Die Kolben sind im Ausführungsbeispiel gleichmäßig verteilt und so angeordnet, daß eine gleichmäßige Beaufschlagung über die gesamte Reibfläche, insbesondere bei einem Betriebsreibwert zwischen etwa 0,40 und 0,45, bei einer Drehung der Bremsscheibe 11 in Richtung des Pfeiles D, sichergestellt ist, so daß keine lokal erhöhten Wärmestromdichten auftreten. Dies kann bspw. auch durch Verwendung von acht Kolben in Verbindung mit vier Belägen pro Zuspanneinrichtung erzielt werden. Vorzugsweise werden zur Vermeidung ungleichmäßiger Leistungsverteilung mehrere Einzelreibbeläge mit jeweils zugeordneten individuellen Zuspanneinrichtungen eingesetzt. Dies kann über Einkolbensättel oder Mehrkolbensättel erfolgen, in welchen ein oder mehrere, vorzugsweise zwei bis sechs, besonders bevorzugt vier oder sechs Reibbeläge angeordnet sind. Diese Reibbeläge werden vorzugsweise mit jeweils zwei bis vier Kolben so angepreßt, daß auch unter Wirkung des Bremsmoments eine gleichmäßige Pressung gewährleistet ist. Die Reibbeläge dieser Bremsbacken sind wie beschrieben vorteilhafterweise radial groß, in Umfangsrichtung jedoch vergleichsweise klein.

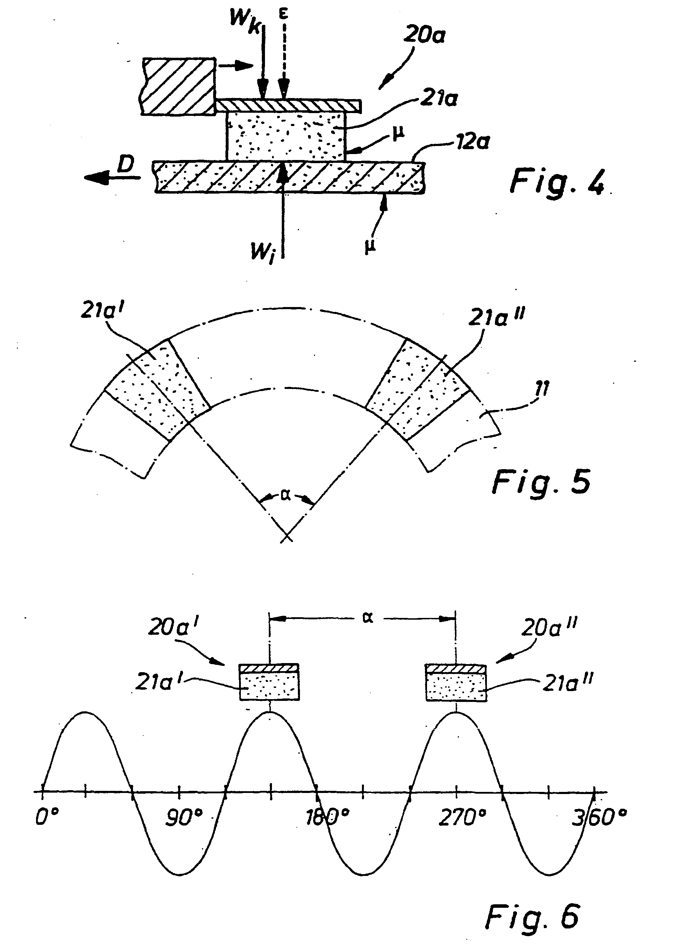

Nicht dargestellt ist, daß die mindestens eine Zuspanneinrichtung ferner mechanische und oder elektronische Ausgleichselemente aufweisen kann, welche so ausgelegt sind, daß die Zuspannkräfte über das Prinzip der ausgeglichenen Hebel gleichmäßig auf mehrere Reibbeläge verteilt sind. Das Ergebnis ist in Figur 4 schematisch dargestellt. Die Wirklinie der idealen Pressung bei einer Drehung der Bremsscheibe 11 in Richtung des Pfeiles D und einem gegebenen Reibwert µ ist mit Wi bezeichnet. Die Wirklinie des Kolbens ist mit Wk bezeichnet. Die durch die Einwirkung des Kolbens eingeleitete Energie ε wird als Funktion des Reibwertes µ so gesteuert, daß die dargestellte ideale Pressung erreicht wird. Dadurch wird ein Gleichgewicht am Einzelbremsbacken und somit eine Verbesserung der Pressung erreicht. Auch durch Verwendung von Reibbelägen mit einer Kompressibilität von über 1 µm/bar Bremsflüssigkeitsdruck und/oder einer zwischen den Reibbelägen und der Zuspanneinrichtung vorgesehenen Zwischenschicht mit einer Kompressibilität über 1 µm/bar Bremsflüssigskeitsdruck kann eine Verbesserung der Pressung zwischen Bremsscheibenrotor und Bremsbacken erreicht werden.

Entsprechendes gilt selbstverständlich für die Reibfläche 12b.

Zur Unterdrückung von Bremsgeräuschen sind gemäß Figur 5 je zwei Bremsbacken 20a', 20a'' pro Reibfläche der Bremsscheibe 11 so angeordnet, daß ihre Wirklinien einen Winkel α von etwa 110 bis 130° einschließen. Das Ergebnis ist in Figur 6 dargestellt. Man sieht die typische K0/3-Schwingung des Bremsscheibenrotors als Funktion des Rotordrehwinkels, wobei durch die Anordnung der Reibflächen 21a', 21a'' Schwingungsbäuche der K0/3-Schwingung behindert werden. Entsprechendes gilt bei geeigneter Anordnung der Bremsbacken für Schwingungsknoten.

## Patentansprüche

1. Bremseinheit (10), welche mindestens zwei Bremsbacken (20a, 20b) mit je einem Reibbelag (21a,21b) und mindestens einen Bremsscheibenrotor (11) aufweist, sowie mindestens eine Zuspanneinrichtung (30) aufweist, welche beim Bremsvorgang auf die Bremsbacken (20a,20b) einwirkt, wobei mindestens zwei Zuspanneinrichtungen (30) vorgesehen sind, welche auf mindestens zwei Bremsbacken (20a,20b) einwirken, wobei Bremsbacken mit einzelnen Reibbelägen mit jeweils zugeordneten individuellen Zuspanneinrichtungen vorgesehen sind und die mindestens zwei Zuspanneinrichtungen (30) so ausgelegt sind, daß beim Bremsvorgang die auf die Bremsbacken (20a,20b) einwirkende Pressung im wesentlichen gleichmäßig auf die Reibfläche (12a,12b) einwirkt
**dadurch gekennzeichnet,**
• **dass** die äußeren Flächen des Bremsscheibenrotors (11) zumindest teilweise je eine Reibfläche (12a,12b) aus einem Metall-Keramik-Verbundwerkstoff (CMC) für jeweils einen Reibbelag (21a,21b) bilden,
• **dass** mindestens zwei Kolben (31,32) pro Bremsbacke (20a,20b) vorgesehen sind,
• und **daß** die Reibbeläge (21a,21b) der Bremsbacken (20a,20b) mindestens 15 % der Reibfläche (12a,12b) des Bremsscheibenrotors (11) abdecken,
**daß** das Verhältnis der mittleren Höhe (h) zur mittleren Breite (b) jedes Reibbelages (21a,21b) einer Bremsbacke (20a,20b) etwa 1:1 bis 1:1,6 beträgt, und **daß** je zwei Bremsbacken pro Reibfläche (12a,12b) des Bremsscheibenrotors (11) so angeordnet sind, daß ihre Wirklinien einen Winkel α von etwa 110° bis 130° einschließen.

2. Bremseinheit nach einem der vorhergehenden Ansprüche,
**dadurch gekennzeichnet,**
**daß** mehrere Zuspanneinrichtungen vorgesehen sind, welche auf mindestens vier Bremsbacken einwirken, wobei mindestens zwei Kolben (31,32) pro Bremsbacke vorgesehen sind.

3. Bremseinheit nach einem der vorhergehenden Ansprüche,
**dadurch gekennzeichnet,**
**daß** die mindestens zwei Zuspanneinrichtungen (30) mechanische und/oder elektronische Ausgleichselemente aufweisen, welche so ausgelegt sind, daß die Zuspannkräfte über das Prinzip der ausgeglichenen Hebel gleichmäßig auf mehrere Reibbeläge (21a,21b) verteilt sind.

4. Bremseinheit nach einem der vorhergehenden Ansprüche,
**dadurch gekennzeichnet,**
**daß** die mindestens zwei Kolben (31,32) so angeordnet sind, daß die auf die Bremsbacken (20a,20b) einwirkende Pressung möglichst gleichmäßig ist, insbesondere für Betriebsreibwerte von etwa 0,40 bis 0,45.

5. Bremseinheit nach einem der vorhergehenden Ansprüche,
**dadurch gekennzeichnet,**
**daß** die Reibbeläge (21a,21b) eine Kompressibilität von über 1 µm/bar Bremsflüssigkeitsdruck aufweisen.

6. Bremseinheit nach einem der vorhergehenden Ansprüche,
**dadurch gekennzeichnet,**
**daß** zwischen den Reibbelägen (21a,21b) der Bremsbacken (20a,20b) und der Zuspanneinrichtung (30) eine Zwischenschicht vorgesehen ist, deren Kompressibilität über 1 µm/bar Bremsflüssigkeitsdruck beträgt.

7. Bremseinheit nach einem der vorhergehenden Ansprüche,
**dadurch gekennzeichnet,**
**daß** zumindest die Reibflächen (12a,12b) des Bremsscheibenrotors (11) aus einem Aluminium-Keramik-Verbundwerkstoff oder einem Silizium-Keramik-Verbundwerkstoff gebildet sind.

8. Bremseinheit nach einem der vorhergehenden Ansprüche,
**dadurch gekennzeichnet,**
**daß** zumindest die Reibflächen (12a,12b) des Bremsscheibenrotors (11) aus einem faserverstärkten Verbundwerkstoff gebildet sind.

9. Bremseinheit Anspruch 8,
**dadurch gekennzeichnet,**
**daß** der Verbundwerkstoff als Verstärkungsfasern Kohlefasern und/oder Siliziumcarbidfasern aufweist.

10. Bremseinheit nach einem der Ansprüche 8 oder 9,
**dadurch gekennzeichnet,**
**daß** der Verbundwerkstoff als Verstärkungsfasern Langfasern, vorzugsweise in Form von Fasergeweben oder Fasergelegen, aufweist.

11. Bremseinheit nach einem der Ansprüche 8 oder 9,
**dadurch gekennzeichnet,**
**daß** der Verbundwerkstoff als Verstärkungsfasern Kurzfasern, vorzugsweise isotrop orientierte Kurzfasern aufweist.

12. Bremseinheit nach einem der vorhergehenden Ansprüche,
**dadurch gekennzeichnet,**
**daß** der Verbundwerkstoff als Keramik-Komponente eine Siliziumcarbid-Keramik oder eine Aluminiumoxid-Keramik aufweist.

13. Bremseinheit nach einem der vorhergehenden Ansprüche,
**dadurch gekennzeichnet,**
**daß** die Reibfläche (12a,12b) des Bremsscheibenrotors (11) und der Bremsscheibenrotor (11) einstückig ausgebildet sind und aus demselben Material bestehen.

## Claims

1. Brake unit (10), which has at least two brake shoes (20a, 20b), each with a friction lining (21a, 21b), and at least one brake disc rotor (11), and at least one application device (30), which acts upon the brake shoes (20a, 20b) during the braking operation, at least two application devices (30) being provided, which act upon at least two brake shoes (20a, 20b), brake shoes being provided with individual friction linings, each with associated individual application devices, and the at least two application devices (30) being designed in such a way that the pressure acting on the brake shoes (20a, 20b) acts essentially uniformly on the friction surface (12a, 12b) during the braking operation,
**characterized**
- **in that** the outer surfaces of the brake disc rotor (11) each have at least partially a friction surface (12a, 12b) composed of a metal/ceramic composite material (CMC) for respective friction linings (21a, 21b),
- **in that** at least two pistons (31, 32) are provided per brake shoe (20a, 20b),
- and **in that** the friction linings (21a, 21b) of the brake shoes (20a, 20b) cover at least 15% of the friction surface (12a, 12b) of the brake disc rotor (11),
**in that** the ratio of the mean height (h) to the mean width (b) of each friction lining (21a, 21b) of a brake shoe (20a, 20b) is approximately 1:1 to 1:1.6, and
**in that** two brake shoes per friction surface (12a, 12b) of the brake disc rotor (11) are arranged in such a way that their lines of action enclose an angle α of about 110 to 130°.

2. Brake unit according to the preceding claim, **characterized in that** a plurality of application devices is provided, which act on at least four brake shoes, at least two pistons (31, 32) being provided per brake shoe.

3. Brake unit according to one of the preceding claims, **characterized in that** the at least two application devices (30) have mechanical and/or electronic compensation elements, which are designed in such a way that the application forces are distributed uniformly to a plurality of friction linings (21a, 21b) using the principle of balanced levers.

4. Brake unit according to one of the preceding claims, **characterized in that** the at least two pistons (31, 32) are arranged in such a way that the pressure acting on the brake shoes (20a, 20b) is as uniform as possible, in particular for operating friction coefficients of about 0.40 to 0.45.

5. Brake unit according to one of the preceding claims, **characterized in that** the friction linings (21a, 21b) have a compressibility of over 1 µm/bar brake fluid pressure.

6. Brake unit according to one of the preceding claims, **characterized in that** an intermediate layer, the compressibility of which is over 1 µm/bar brake fluid pressure, is provided between the friction linings (21a, 21b) of the brake shoes (20a, 20b) and the application device (30).

7. Brake unit according to one of the preceding claims, **characterized in that** at least the friction surfaces (12a, 12b) of the brake disc rotor (11) are formed by an aluminium/ceramic composite material or a silicon/ceramic composite material.

8. Brake unit according to one of the preceding claims, **characterized in that** at least the friction surfaces (12a, 12b) of the brake disc rotor (11) are formed by a fibre-reinforced composite material.

9. Brake unit according to Claim 8, **characterized in that** the composite material contains carbon fibres and/or silicon carbide fibres as reinforcing fibres.

10. Brake unit according to either of Claims 8 and 9, **characterized in that** the composite material contains long fibres, preferably in the form of woven fibre structures or nonwoven fibre structures, as reinforcing fibres.

11. Brake unit according to either of Claims 8 and 9, **characterized in that** the composite material contains short fibres, preferably isotropically oriented short fibres, as reinforcing fibres.

12. Brake unit according to one of the preceding claims, **characterized in that** the composite material contains a silicon carbide ceramic or an aluminium oxide ceramic as the ceramic component.

13. Brake unit according to one of the preceding claims, **characterized in that** the friction surface (12a, 12b) of the brake disc rotor (11) and the brake disc rotor (11) are formed in one piece and are composed of the same material.

## Revendications

1. Unité de freinage (10), qui comprend au moins deux segments de frein (20a, 20b) munis chacun d'une garniture de friction (21a, 21b) et au moins un rotor de disque de frein (11), ainsi qu'au moins un mécanisme d'application du frein (30) qui agit sur les segments de frein (20a, 20b) pendant le processus de freinage, au moins deux mécanismes d'application du frein (30) étant prévus, qui agissent sur au moins deux segments de frein (20a, 20b), des segments de frein avec des garnitures de friction individuelles et avec des mécanismes d'application du frein individuels associés à chacun étant prévus et lesdits au moins deux mécanismes d'application du frein (30) étant conçus de telle sorte que, pendant un processus de freinage, la pression d'application exercée sur les segments de frein (20a, 20b) agit sensiblement uniformément sur la surface de frottement (12a, 12b), **caractérisée**
**en ce que** les faces extérieures du rotor de disque de frein (11) forment au moins en partie chacune une surface de frottement (12a, 12b) pour chaque garniture de friction (21a, 21b), surface qui est réalisée dans un matériau composite en métal et céramique (CMC),
**en ce qu'**il est prévu au moins deux pistons (31, 32) pour chaque segment de frein (20a, 20b),
**en ce que** les garnitures de friction (21a, 21b) des segments de frein (20a, 20b) couvrent au moins 15 % des surfaces de frottement (12a, 12b) du rotor de disque de frein (11),
**en ce que** le rapport entre la hauteur moyenne (h) et la largeur moyenne (b) de chaque garniture de friction (21a, 21b) d'un segment de frein (20a, 20b) est de l'ordre de 1:1 à 1:1,6 environ,
et **en ce que** deux segments de frein par surface de frottement (12a, 12b) du rotor de disque de frein (11) sont disposés de telle sorte que leurs lignes d'action forment un angle α d'environ 110° à 130°.

2. Unité de freinage selon la revendication précédente, **caractérisée en ce qu'**il est prévu plusieurs mécanismes d'application du frein qui agissent sur au moins quatre segments de frein, au moins deux pistons (31, 32) étant prévus pour chaque segment de frein.

3. Unité de freinage selon l'une quelconque des revendications précédentes, **caractérisée en ce que** lesdits au moins deux mécanismes d'application du frein (30) sont munis d'éléments d'équilibrage mécaniques et/ou électroniques qui sont conçus de telle sorte que les forces d'application du frein sont réparties uniformément sur plusieurs garnitures de friction (21a, 21b) selon le principe des leviers équilibrés.

4. Unité de freinage selon l'une quelconque des revendications précédentes, **caractérisée en ce que** lesdits au moins deux pistons (31, 32) sont disposés de telle sorte que la pression d'application exercée sur les segments de frein (20a, 20b) est aussi uniforme que possible, en particulier pour des valeurs de frottement en service d'environ 0,40 à 0,45.

5. Unité de freinage selon l'une quelconque des revendications précédentes, **caractérisée en ce que** les garnitures de friction (21a, 21b) ont une compressibilité supérieure à 1 µm/bar de pression du liquide de frein.

6. Unité de freinage selon l'une quelconque des revendications précédentes, **caractérisée en ce qu'**une couche intermédiaire dont la compressibilité est supérieure à 1 µm/bar de pression du liquide de frein est prévue entre les garnitures de friction (21a, 21b) des segments de frein (20a, 20b) et le mécanisme d'application du frein (30).

7. Unité de freinage selon l'une quelconque des revendications précédentes, **caractérisée en ce qu'**au moins les surfaces de frottement (12a, 12b) du rotor de disque de frein (11) sont réalisées dans un matériau composite en aluminium et céramique ou dans un matériau composite en silicium et céramique.

8. Unité de freinage selon l'une quelconque des revendications précédentes, **caractérisée en ce qu'**au moins les surfaces de frottement (12a, 12b) du rotor de disque de frein (11) sont réalisées dans un matériau composite renforcé par fibres.

9. Unité de freinage selon la revendication 8,
**caractérisée en ce que** les fibres de renforcement du matériau composite sont des fibres de carbone et/ou des fibres de carbure de silicium.

10. Unité de freinage selon l'une des revendications 8 ou 9, **caractérisée en ce que** les fibres de renforcement du matériau composite sont des fibres longues, de préférence en forme de tissus de fibres ou de nappes de fibres.

11. Unité de freinage selon l'une des revendications 8 ou 9, **caractérisée en ce que** les fibres de renforcement du matériau composite sont des fibres courtes, de préférence des fibres courtes à orientation isotrope.

12. Unité de freinage selon l'une quelconque des revendications précédentes, **caractérisée en ce que** la composante céramique du matériau composite est une céramique de carbure de silicium ou une céramique d'oxyde d'aluminium.

13. Unité de freinage selon l'une quelconque des revendications précédentes, **caractérisée en ce que** les surfaces de frottement (12a, 12b) du rotor de disque de frein (11) et le rotor de disque de frein (11) sont réalisés d'un seul tenant et dans le même matériau.
